# EUROPEAN PATENT APPLICATION

(11) **EP 4 707 735 A1**
(43) Date of publication of application: **11.03.2026**
(21) Application number: 25178578.8
(22) Date of filing: 23.05.2025
(51) Int. Cl.: G01C 21/00, G06N 20/00, G06T 7/70, G06V 10/82, G06V 10/84

(54) **VISUAL LOCATION OF AERIAL VEHICLES USING DYNAMIC ALEATORIC UNCERTAINTY**

(30) Priority: 04.09.2024 US 202418824231
(71) Applicant: The Boeing Company, Arlington, VA 22202 (US)
(72) Inventor: ROSE, Alyssa Bekai, Arlington, 22202 (US); HOUCHENS, Trevor M., Arlington, 22202 (US); DOWNES, Lena M., Arlington, 22202 (US); BURKS, Charles L., Arlington, 22202 (US); MONTEIRO, Sildomar T., Arlington, 22202 (US)
(74) Representative: Boult Wade Tennant LLP

(57) **Abstract**

Techniques for localizing a vehicle in real time using dynamic uncertainty estimates are presented. The techniques include obtaining a terrain image captured by the vehicle; passing the terrain image to a trained evidential deep learning neural network subsystem, from which a dynamic uncertainty value and a first feature vector are obtained in real time; for each of a plurality of candidate terrain locations, comparing the first feature vector to a respective second feature vector representative of a candidate terrain location, from which a respective similarity score is obtained; for at least one of the plurality of candidate terrain locations, updating in real time, by a recursive Bayesian estimator, a respective location weight based on the dynamic uncertainty value and the respective similarity score; estimating, in real time, a location of the vehicle based on the plurality of location weights; and providing the location of the vehicle.

## Description

### Field

This disclosure relates generally to geolocating aerial vehicles.

### Background

Many aircraft utilize GPS to obtain localization estimates, which aid in navigation. However, GPS signals are vulnerable to interference, e.g., through jamming or spoofing by bad actors. Reliance on GPS alone for localization creates a single point of failure for navigation systems, a safety-critical component of aircraft. GPS-denied localization aims to localize vehicles through other sensing modalities, without reliance on GPS.

Cameras are a popular sensing modality within GPS-denied localization due to their ubiquity and low cost. Visual imagery taken from an aerial vehicle can be compared to existing imagery of an area and matched to determine the aerial vehicle's location, a task called visual place recognition (VPR). Though VPR frequently refers to matching between an image taken from a ground vehicle and pre-existing images taken from the same perspective, VPR can be performed between a variety of perspectives: ground-to-ground, aerial-to-satellite, and even ground-to-satellite. Aircraft can use VPR to localize without GPS by comparing images taken from the aircraft during flight with pre-existing satellite images. However, matching aircraft images to pre-existing satellite images can be challenging due to, e.g., variation in camera parameters, lighting, weather, seasonal effects, structural changes in the environment, and sensor noise.

Statistical estimators can combat sensor noise and improve VPR performance by processing images over time. However, a statistical estimator, such as a particle filter, requires uncertainty estimates to perform well in combining measurements to remove noise. Hand-tuned measurement models that provide uncertainty estimates are difficult to calibrate, because they depend on many different factors that can be hard to quantify or account for. Due to their calibration difficulty, hand-tuned measurement models usually provide only static uncertainty estimates during operation. This means that these measurement models assume the same level of uncertainty for all input measurements over time. Importantly, visual measurements are prone to variable noise levels, e.g., because while some images contain salient features that uniquely identify the location of image capture, other images contain features that lack visual distinctness and have a high chance of perceptual aliasing. A static measurement model flattens these differences, assuming the same level of uncertainty across all image matches. Thus, statistical estimators that rely on static uncertainty estimates produce inaccurate sub-optimal results.

Machine learning (ML) algorithms are well-suited to pattern matching. ML architectures like convolutional neural networks (CNN) and visual transformers (ViT) have demonstrated successes at many computer vision tasks that far surpass the performance of non-ML systems. Nevertheless, while ML's strength for pattern matching and generalization make it a candidate for performing VPR, appearance variation in input images still yields some level of aleatoric uncertainty in ML image matching.

However, ML systems generally lack the ability to provide explanations of their inner workings or reliable quantitative measures of uncertainty. This limits their ability to be combined with other modules, such as statistical estimators, within larger decision-making systems.

Some attempts to include uncertainty estimation with machine learning, such as Bayesian neural networks, ensemble methods, and Monte Carlo dropout methods, involve some form of sampling, which is computationally expensive. Here, sampling refers to multiple passes of an input datum through a machine learning system. A first type of sampling involves repeatedly perturbing and passing an input datum through a machine learning system. A second type of sampling involves passing an input datum through many slightly different machine learning systems. Both types of sampling consume excessive power, and, depending on the specific implementation, may also consume excessive time and/or require an excessive processing footprint. Systems that are deployed in the real world, where uncertainty estimation is most crucial, often require algorithms to run in real-time on small-footprint and low-power hardware. These constraints make sampling-heavy approaches impractical.

Other attempts to integrate uncertainty estimation with machine learning, such as Gaussian neural networks, are inherently inaccurate and too slow for application such as real-time location of high-speed aerial vehicles.

### Summary

According to various examples, a method of localizing an aerial vehicle in real time using dynamic uncertainty estimates is presented. The method includes: obtaining a terrain image captured by the aerial vehicle; passing the terrain image captured by the aerial vehicle to a trained evidential deep learning neural network subsystem, from which a dynamic uncertainty value and a first feature vector are obtained in real time, wherein the trained evidential deep learning neural network subsystem is trained to provide feature vectors and associated dynamic uncertainty values corresponding to input images; for each of a plurality of candidate terrain locations, comparing the first feature vector to a respective second feature vector representative of a candidate terrain location of the plurality of candidate terrain locations, from which a respective similarity score is obtained, whereby each candidate terrain location of the plurality of candidate terrain locations is associated with a respective similarity score in real time; for at least one of the plurality of candidate terrain locations, updating in real time, by a recursive Bayesian estimator, a respective location weight based at least on the dynamic uncertainty value and the respective similarity score, from which a plurality of location weights are obtained; estimating, in real time, a location of the aerial vehicle based on the plurality of location weights; and providing the location of the aerial vehicle.

Various optional features of the above method examples include the following. The providing may include providing to a navigation system, wherein the aerial vehicle navigates based on the location of the aerial vehicle. Respective dynamic uncertainty values may be obtained from a single pass of a respective terrain image through the trained evidential deep learning neural network subsystem. The method may include repeating the obtaining, the passing, the comparing, the updating, and the estimating, whereby the location of the aerial vehicle is updated in real time. The trained evidential deep learning neural network subsystem may be trained using a training corpus comprising labeled pairs of matched and unmatched images. The trained evidential deep learning neural network subsystem may be trained by, for each respective image pair in the training corpus, performing actions comprising: passing each image of a respective image pair individually though one or more neural networks, from which a respective pair of feature vectors is obtained; computing a respective loss based on at least the respective pair of feature vectors; and updating weights of the one or more neural networks base on the respective loss. Each respective second feature vector may be representative of a respective satellite image of a candidate terrain location of the plurality of candidate terrain locations. Each respective location weight may be updated further based on a respective uncertainty value of a respective second feature vector. The recursive Bayesian estimator may include a particle filter. The updating may be performed using a measurement model of the recursive Bayesian estimator.

According to various examples, a system for localizing an aerial vehicle in real time using dynamic uncertainty estimates is presented. The system includes: a non-transitory computer readable medium comprising instructions; and at least one electronic processor that executes the instructions to perform operations comprising: obtaining a terrain image captured by the aerial vehicle; passing the terrain image captured by the aerial vehicle to a trained evidential deep learning neural network subsystem, from which a dynamic uncertainty value and a first feature vector are obtained in real time, wherein the trained evidential deep learning neural network subsystem is trained to provide feature vectors and associated dynamic uncertainty values corresponding to input images; for each of a plurality of candidate terrain locations, comparing the first feature vector to a respective second feature vector representative of a candidate terrain location of the plurality of candidate terrain locations, from which a respective similarity score is obtained, whereby each candidate terrain location of the plurality of candidate terrain locations is associated with a respective similarity score in real time; for at least one of the plurality of candidate terrain locations, updating in real time, by a recursive Bayesian estimator, a respective location weight based at least on the dynamic uncertainty value and the respective similarity score, from which a plurality of location weights are obtained; estimating, in real time, a location of the aerial vehicle based on the plurality of location weights; and providing the location of the aerial vehicle.

Various optional features of the above system examples include the following. The providing may include providing to a navigation system, wherein the aerial vehicle navigates based on the location of the aerial vehicle. Respective dynamic uncertainty values may be obtained from a single pass of a respective terrain image through the trained evidential deep learning neural network subsystem. The actions may further include repeating the obtaining, the passing, the comparing, the updating, and the estimating, whereby the location of the aerial vehicle is updated in real time. The trained evidential deep learning neural network subsystem may be trained using a training corpus comprising labeled pairs of matched and unmatched images. The trained evidential deep learning neural network subsystem may be trained by, for each respective image pair in the training corpus, performing actions comprising: passing each image of a respective image pair individually though one or more neural networks, from which a respective pair of feature vectors is obtained; computing a respective loss based on at least the respective pair of feature vectors; and updating weights of the one or more neural networks base on the respective loss. Each respective second feature vector may be representative of a respective satellite image of a candidate terrain location of the plurality of candidate terrain locations. Each respective location weight may be updated further based on a respective uncertainty value of a respective second feature vector. The recursive Bayesian estimator may include a particle filter. The updating may be performed using a measurement model of the recursive Bayesian estimator.

Combinations, (including multiple dependent combinations) of the above-described elements and those within the specification have been contemplated by the inventors and may be made, except where otherwise indicated or where contradictory.

### Brief Description of the Drawings

Various features of the examples can be more fully appreciated, as the same become better understood with reference to the following detailed description of the examples when considered in connection with the accompanying figures, in which:
Fig. 1 is a schematic diagram of a system for localizing an aerial vehicle in real time using dynamic uncertainty estimates; and
Fig. 2 is a flow chart for a method of localizing an aerial vehicle in real time using dynamic uncertainty estimates.

### Description of the Examples

Reference will now be made in detail to examples, illustrated in the accompanying drawings. Wherever convenient, the same reference numbers will be used throughout the drawings to refer to the same or like parts. In the following description, reference is made to the accompanying drawings that form a part thereof, and in which is shown by way of illustration specific exemplary examples in which the examples may be practiced. These examples are described in sufficient detail to enable those skilled in the art to practice the disclosure and it is to be understood that other examples may be utilized and that changes may be made without departing from the scope of the disclosure. The following description is, therefore, merely exemplary.

Evidential deep learning (EDL) treats neural network training as evidential acquisition to represent neural network predictions as distributions with mean and variance. Some examples use EDL uncertainty estimation, which provides well-calibrated uncertainties from a single pass of an input datum through a neural network, providing scalable uncertainty estimates without the need for resource-intensive sampling. Some examples train a neural network using a Gaussian loss function, which trains a machine learning subsystem to provide uncertainty estimates with only a single forward pass of an input datum. Some examples are projected to provide a 98% decrease in final estimation error as compared to ML-based VPR with hand-tuned uncertainty models.

Some examples use EDL uncertainty estimates for the measurement provided to a recursive Bayesian estimator (e.g., a particle filter) in a visual localization system. According to some examples, aerial images that are taken from an aerial vehicle during deployment are compared in real time to existing satellite images of the aircraft's operational area. According to some examples, an EDL-equipped neural network is used to predict the similarity of the aerial image to different regions of previously-acquired and stored satellite imagery. Thus, some examples improve upon prior art systems that use a neural network to predict only image similarity and rely on static hand-tuned measurement models to attempt to incorporate uncertainty within a particle filter. Due to the complexity involved in hand-tuning measurement models, such prior art systems generally assume a static uncertainty level in input images, which produces inaccurate results. Some examples improve upon such prior art systems by using a neural network that predicts both similarity and uncertainty at the same time, in a single neural network inference pass. For example, examples that use EDL with a recursive Bayesian estimator for visual localization provide accurate aleatoric uncertainty values that are generated dynamically, which account for input images that contain varying levels of noise. Consequently, such examples provide more accurate localization results compared to prior art systems that rely on static hand-tuned uncertainty estimates.

These and other features and advantages are shown and described herein in reference to the figures.

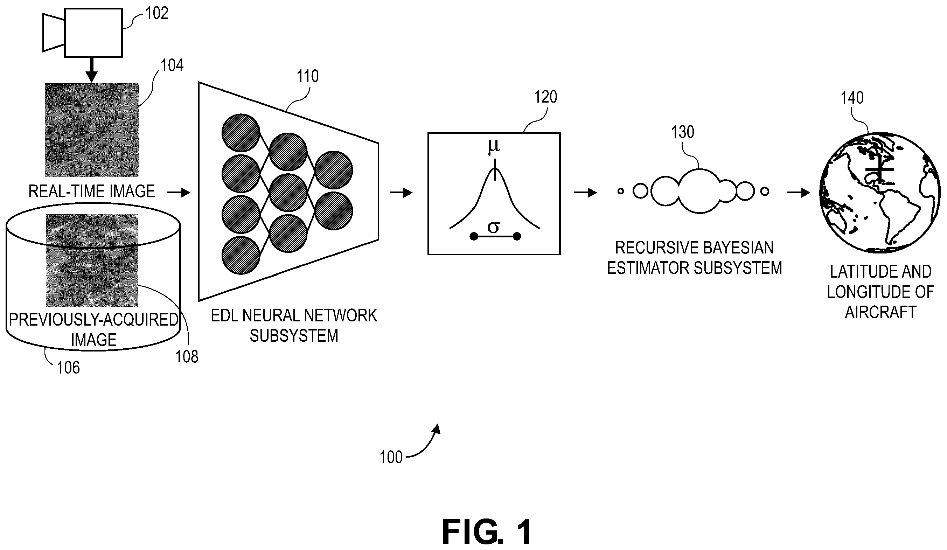

Fig. 1 is a schematic diagram of a system 100 for localizing an aerial vehicle in real time using dynamic uncertainty estimates. Broadly, the system 100 includes a combination of an EDL neural network subsystem 110 and a recursive Bayesian estimator subsystem 130 (e.g., a particle filter) for visual localization. The system 100 may be implemented aboard an aerial vehicle. As shown in Fig. 1, the system 100 includes an on-board image sensor 102, and a non-transitive electronic previously-acquired image storage 106, as well as one or more electronic processors.

The image sensor 102 may be a visible light camera, an infrared camera, or a synthetic aperture radar (SAR) sensor, by way of non-limiting examples.

The electronic previously-acquired image storage 106 stores previously-acquired images (or feature vectors representative thereof, as described in detail below in reference to the EDL neural network subsystem 110) taken via satellite or aircraft days, weeks, months, or years in advance of the deployment of the system 100. The previously-acquired images depict terrain over which the aerial vehicle is deployed. Each previously-acquired image 108 (or corresponding feature vector) is stored in association with data indicating its location, e.g., in the form of latitude and longitude coordinates. According to some examples, each previously-acquired image (or feature vector) is also stored in association with an uncertainty value, which is representative of a confidence in the contents of the image.

The EDL neural network subsystem 110 may include one or more neural networks. For example, the EDL neural network subsystem 110 may include one or two neural networks. If the EDL neural network subsystem 110 includes two neural networks, then the neural networks may have identical architectures; one network for the real-time images and one network for the previously-acquired images. Each of the neural network(s) may include a backbone neural network, which extracts features from an input image, and a head. The backbone neural network may include an image classification network like ResNet, ViT, or VGG, but without the final classification layers, such that its output is a high-dimensional feature vector rather than an image classification. More generally, the backbone neural network may include convolutional neural network layers, a visual transformer, or another architecture that extracts a feature vector from an image. The head may include pooling layers, fully connected layers, and activation functions that ultimately produce a feature embedding and an uncertainty value as described herein. The EDL neural network subsystem 110 may also include an implementation of a comparison function, such as Euclidean distance, by way of non-limiting example, which compares feature vectors output by the neural network(s).

Prior to deployment, the EDL neural network subsystem 110 may have been trained using a training corpus that includes labeled pairs of matched and unmatched images, where a label for a respective pair of images indicates whether the images match or not. The evidential deep learning subsystem 110 is trained using each respective image pair in the training corpus by performing actions as follows. Each image of each labeled image pair is input individually though the neural network or networks. The neural network(s) generate a corresponding feature vector from each input image. At least the resultant feature vectors from the labeled image pair are passed to a loss function, which computes a loss. A first non-limiting example loss function may include Euclidean distance, for which the loss includes a computed distance between two vectors in hyperspace. A second non-limiting example loss function is triplet loss, which compares a baseline feature vector to both a matching vector and to a non-matching vector. The loss function used to train the EDL neural network subsystem 110 may interpret image feature vectors as Gaussian distributions so as to train the EDL neural network subsystem 110 to generate the predicted aleatoric uncertainties. The loss is backpropagated through the neural network(s) and the weights of the neural network(s) are updated accordingly based on the loss function. This process may be repeated for each labeled image pair of the training corpus.

During deployment, the system 100 may operate in real time, where each time step includes capturing and processing a real-time image 104 as described herein. During deployment, the image sensor 102 acquires a real-time image 104 of the terrain beneath the aerial vehicle, e.g., as a still image within a video stream captured by the image sensor 102. Each real-time image 104 acquired by the image sensor 102 is provided to the EDL neural network subsystem 110 and compared with one or more previously-acquired images, e.g., 104. The EDL neural network subsystem 110 outputs both a similarity between pairs of images that are taken at different times (the real-time image 104 acquired by the aerial vehicle during runtime and a previously-acquired image 108), and at least an uncertainty associated with the real-time image 104. According to some examples, the EDL neural network subsystem may also output an uncertainty associated with the previously-acquired image 108 at this point. The system 100 may perform multiple such comparisons at each timestep, e.g., comparing the real-time image 104 to each of a plurality of candidate previously-acquired images. The candidate previously-acquired images may correspond to all images, or feature vectors thereof, stored in the electronic previously-acquired image storage 106, or a subset of the previously-acquired images, or feature vectors thereof. For example, the subset may correspond to images, or feature vectors thereof, for locations that are within a specified radius of the previously-determined location of the aerial vehicle.

Thus, each comparison performed by the EDL neural network subsystem 110 between the real-time image 102 and a previously-acquired image 104 results in the EDL neural network subsystem 110 producing an associated output 120, which includes a predicted similarity, denoted *µ*, and a respective aleatoric uncertainty, denoted σ, for at least the real-time image 104. The similarity *µ* represents how closely the compared images match, and each aleatoric uncertainty *σ* represents a confidence in the content of the respective image. The outputs from the EDL neural network subsystem 110 are provided to the recursive Bayesian estimator subsystem 130.

The recursive Bayesian estimator subsystem 130 may be implemented using any of a variety of Bayesian estimators, such as a Kalman filter, a Monte Carlo Localization, or a particle filter, by way of non-limiting examples. For purposes of illustration rather than limitation, the recursive Bayesian estimator subsystem 130 is described in reference to a particle filter. The particle filter uses the similarity *µ* from each comparison of a previously-acquired image 108 with the real-time image 104 and the aleatoric uncertainty *σ* of the real-time image 104 to reweight its particles. According to some examples, the particle filter also uses the aleatoric uncertainty associated with the previously-acquired image 108 for the reweighting. Reweighting may be performed with a Gaussian measurement model. In contrast with prior systems, instead of a static, hand-tuned Gaussian measurement model, the measurement model used in the recursive Bayesian estimator subsystem 130 according to some examples is modulated by the dynamic aleatoric uncertainty output by the EDL neural network subsystem 110. The distribution of the dynamic aleatoric uncertainty values is centered around zero, and the standard deviation of the distribution determines the standard deviation of the Gaussian measurement model. The similarity is the raw measurement provided to the Bayesian estimator. For each previously-acquired image 108 that is compared to the real-time image 104, the recursive Bayesian estimator subsystem 130 outputs a noise-filtered weight corresponding to the previously-acquired image 108. Because each previously-acquired image 108 (or feature vector thereof) is stored in the previously-acquired image storage 106 in association with data indicative of the location depicted in the image, each weight output by the Bayesian estimator subsystem 110 corresponds to a location.

The system 100 keeps track of the weights provided by the recursive Bayesian estimator subsystem and, at each time step, generates a real-time predicted location 140, e.g., a latitude and longitude therefrom. According to some examples, the predicted location may be the location corresponding to the highest weight. According to some examples, the predicted location may be the location represented by a weighted average of multiple locations with the highest weights, e.g., the peak of a two-dimensional density of the weights.

The system 100 may be coupled with, and provide the predicted location at each time step to, any of a variety of other systems, e.g., a system that displays the location or a navigation system.

The use of the EDL neural network subsystem 110 with the recursive Bayesian estimator subsystem 130 for visual localization greatly improves localization performance compared to prior art visual localization systems that use a vanilla neural network, without learned uncertainty values, in combination with a particle filter.

Note that although the system 100 is described in reference to an aerial vehicle, the system 100 may be used to locate any vehicle, such as a terrestrial vehicle or submersible vehicle, by way of non-limiting examples. For example, the system 100 may be used to localize a ground vehicle relative to satellite imagery, e.g., using real-time images captured by the ground vehicle or by an aircraft that includes the ground vehicle in the field of view of the real-time images.

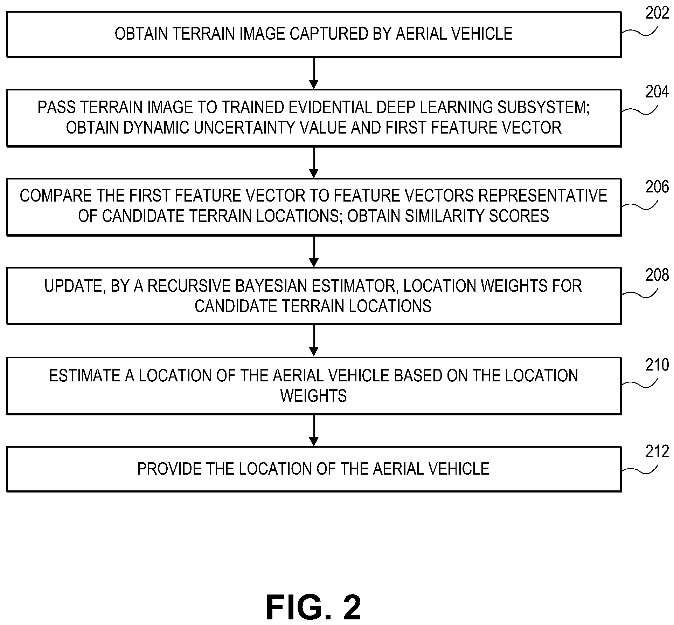

Fig. 2 is a flow chart for a method 200 of localizing an aerial vehicle in real time using dynamic uncertainty estimates. The method 200 may be used by a variety of vehicles, such as aerial vehicles, terrestrial vehicles, aquatic vehicles, or other objects in motion capable of obtaining images of their surroundings. The method 200 may be implemented using a system, such as the system 100 shown and described herein in reference to Fig. 1. The method 200 may be implemented in real time, to provide an actual location of an aerial vehicle while in operation.

At 202, the method 200 includes obtaining a terrain image captured by the aerial vehicle. The image may be obtained using an image sensor such as the image sensor 102 as shown and described in reference to Fig. 1. By way of non-limiting example, the image may be obtained by a visible light camera, an infrared camera, or synthetic aperture radar.

At 204, the method 200 includes passing the terrain image captured by the aerial vehicle to a trained EDL neural network subsystem, from which a dynamic uncertainty value and a first feature vector are obtained in real time. The trained EDL neural network subsystem may have previously been trained to provide feature vectors and associated dynamic uncertainty values corresponding to input images, as described herein in reference to the EDL neural network subsystem 110 of Fig. 1.

At 206, the method 200 includes, for each of a plurality of candidate terrain locations, comparing the first feature vector to a respective second feature vector representative of a candidate terrain location of the plurality of candidate terrain locations, from which a respective similarity score is obtained. The comparison may be performed as described herein in reference to the EDL neural network subsystem 110 of Fig. 1. From 206, each candidate terrain location of the plurality of candidate terrain locations is associated with a respective similarity score in real time.

At 208, the method 200 includes, for at least one of the plurality of candidate terrain locations of 206, updating in real time, by a recursive Bayesian estimator, a respective location weight based at least on the dynamic uncertainty value and the respective similarity score. The updating may be performed as described herein in reference to the recursive Bayesian estimator subsystem 130 of Fig. 1. The actions of 208 provide a plurality of location weights, at least one of which is updated at 208.

At 210, the method 200 includes estimating, in real time, a location of the aerial vehicle based on the plurality of location weights. The actions of 210 may be performed as described herein in reference to the system 100 of Fig. 1.

At 212, the method 200 includes providing the location of the aerial vehicle. The location may be provided to any of a variety of other systems, e.g., a system that displays the location, or to a navigation system.

Certain examples can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Examples of the present disclosure are described herein with reference to flowchart illustrations and/or block diagrams of methods, apparatus (systems), and computer program products according to examples of the disclosure. It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions may be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement features of the function/act specified in the flowchart and/or block diagram block or blocks.

In examples, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions may execute entirely on a user's computer, partly on the user's computer, as a stand-alone software package, partly on the user's computer and partly on a remote computer or entirely on the remote computer or server.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

While the disclosure has been described with reference to the exemplary examples thereof, those skilled in the art will be able to make various modifications to the described examples without departing from the true scope. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the scope as defined in the following claims.

The following clauses present further examples:
Clause 1. A method (200) of localizing an aerial vehicle in real time using dynamic uncertainty estimates, the method comprising:
   obtaining (202) a terrain image (104) captured by the aerial vehicle;
   passing (204) the terrain image captured by the aerial vehicle to a trained evidential deep learning neural network subsystem (110), from which a dynamic uncertainty value and a first feature vector are obtained in real time, wherein the trained evidential deep learning neural network subsystem is trained to provide feature vectors and associated dynamic uncertainty values corresponding to input images;
   for each of a plurality of candidate terrain locations, comparing (206) the first feature vector to a respective second feature vector representative of a candidate terrain location of the plurality of candidate terrain locations, from which a respective similarity score is obtained, optionally whereby each candidate terrain location of the plurality of candidate terrain locations is associated with a respective similarity score in real time;
   for at least one of the plurality of candidate terrain locations, updating (208) in real time, by a recursive Bayesian estimator, a respective location weight based at least on the dynamic uncertainty value and the respective similarity score, from which a plurality of location weights are obtained;
   estimating (210), in real time, a location (140) of the aerial vehicle based on the plurality of location weights; and
   providing (212) the location of the aerial vehicle.
Clause 2. The method of Clause 1, wherein the providing comprises providing to a navigation system, wherein the aerial vehicle navigates based on the location of the aerial vehicle.
Clause 3. The method of Clause 1 or Clause 2, wherein respective dynamic uncertainty values are obtained from a single pass of a respective terrain image through the trained evidential deep learning neural network subsystem.
Clause 4. The method of any preceding Clause, further comprising repeating the obtaining, the passing, the comparing, the updating, and the estimating, whereby the location of the aerial vehicle is updated in real time.
Clause 5. The method of any preceding Clause, wherein the trained evidential deep learning neural network subsystem is trained using a training corpus comprising labeled pairs of matched and unmatched images.
Clause 6. The method of any preceding Clause, wherein the trained evidential deep learning neural network subsystem is trained by, for each respective image pair in the training corpus, performing actions comprising:
   passing each image of a respective image pair individually though one or more neural networks, from which a respective pair of feature vectors is obtained;
   computing a respective loss based on at least the respective pair of feature vectors; and
   updating weights of the one or more neural networks based on the respective loss.
Clause 7. The method of any preceding Clause, wherein each respective second feature vector is representative of a respective satellite image of a candidate terrain location of the plurality of candidate terrain locations.
Clause 8. The method of any preceding Clause, wherein each respective location weight is updated further based on a respective uncertainty value of a respective second feature vector.
Clause 9. The method of any preceding Clause, wherein the recursive Bayesian estimator comprises a particle filter.
Clause 10. The method of Clause 9, wherein the updating is performed using a measurement model of the recursive Bayesian estimator.
Clause 11. A system (100) for localizing an aerial vehicle in real time using dynamic uncertainty estimates, the system comprising: a non-transitory computer readable medium comprising instructions; and at least one electronic processor that executes the instructions to perform operations comprising:
   obtaining (202) a terrain image (104) captured by the aerial vehicle;
   passing (204) the terrain image captured by the aerial vehicle to a trained evidential deep learning neural network subsystem (110), from which a dynamic uncertainty value and a first feature vector are obtained in real time, wherein the trained evidential deep learning neural network subsystem is trained to provide feature vectors and associated dynamic uncertainty values corresponding to input images;
   for each of a plurality of candidate terrain locations, comparing (206) the first feature vector to a respective second feature vector representative of a candidate terrain location of the plurality of candidate terrain locations, from which a respective similarity score is obtained, whereby each candidate terrain location of the plurality of candidate terrain locations is associated with a respective similarity score in real time;
   for at least one of the plurality of candidate terrain locations, updating (208) in real time, by a recursive Bayesian estimator, a respective location weight based at least on the dynamic uncertainty value and the respective similarity score, from which a plurality of location weights are obtained;
   estimating (210), in real time, a location (140) of the aerial vehicle based on the plurality of location weights; and
   providing (212) the location of the aerial vehicle.
Clause 12. The system of Clause 11, wherein the providing comprises providing to a navigation system, wherein the aerial vehicle navigates based on the location of the aerial vehicle.
Clause 13. The system of Clause 11 or Clause 12, wherein respective dynamic uncertainty values are obtained from a single pass of a respective terrain image through the trained evidential deep learning neural network subsystem.
Clause 14. The system of any of Clauses 11 - 13, wherein the actions further comprise repeating the obtaining, the passing, the comparing, the updating, and the estimating, whereby the location of the aerial vehicle is updated in real time.
Clause 15. The system of any of Clauses 11 - 14, wherein the trained evidential deep learning neural network subsystem is trained using a training corpus comprising labeled pairs of matched and unmatched images.
Clause 16. The system of Clause 15, wherein the trained evidential deep learning neural network subsystem is trained by, for each respective image pair in the training corpus, performing actions comprising:
   passing each image of a respective image pair individually though one or more neural networks, from which a respective pair of feature vectors is obtained;
   computing a respective loss based on at least the respective pair of feature vectors; and
   updating weights of the one or more neural networks based on the respective loss.
Clause 17. The system of any of Clauses 11 - 16, wherein each respective second feature vector is representative of a respective satellite image of a candidate terrain location of the plurality of candidate terrain locations.
Clause 18. The system of any of Clauses 11 - 17, wherein each respective location weight is updated further based on a respective uncertainty value of a respective second feature vector.
Clause 19. The system of any of Clauses 11 - 18, wherein the recursive Bayesian estimator comprises a particle filter.
Clause 20. The system of Clause 19, wherein the updating is performed using a measurement model of the recursive Bayesian estimator.
Clause 21. The method of any of Clauses 1 - 10, wherein the method is a computer-implemented method.
Clause 22. A computer program comprising instructions which, when the computer program is executed by a computer, cause the computer to carry out the method of any of Clauses 1 - 10 or Clause 21.
Clause 23. A computer-readable storage medium having stored thereon the computer program of Clause 22.
Clause 24. An aerial vehicle comprising the system of any of Clauses 11 - 20.

## Claims

1. A method (200) of localizing an aerial vehicle in real time using dynamic uncertainty estimates, the method comprising:
obtaining (202) a terrain image (104) captured by the aerial vehicle;
passing (204) the terrain image captured by the aerial vehicle to a trained evidential deep learning neural network subsystem (110), from which a dynamic uncertainty value and a first feature vector are obtained in real time, wherein the trained evidential deep learning neural network subsystem is trained to provide feature vectors and associated dynamic uncertainty values corresponding to input images;
for each of a plurality of candidate terrain locations, comparing (206) the first feature vector to a respective second feature vector representative of a candidate terrain location of the plurality of candidate terrain locations, from which a respective similarity score is obtained, whereby each candidate terrain location of the plurality of candidate terrain locations is associated with a respective similarity score in real time;
for at least one of the plurality of candidate terrain locations, updating (208) in real time, by a recursive Bayesian estimator, a respective location weight based at least on the associated dynamic uncertainty value and the respective similarity score, from which a plurality of updated location weights are obtained;
estimating (210), in real time, a location (140) of the aerial vehicle based on the plurality of updated location weights; and
providing (212) the location of the aerial vehicle.

2. The method of claim 1, wherein the providing comprises providing to a navigation system, wherein the aerial vehicle navigates based on the location of the aerial vehicle.

3. The method of claim 1 or claim 2, wherein respective dynamic uncertainty values are obtained from a single pass of a respective terrain image through the trained evidential deep learning neural network subsystem.

4. The method of any preceding claim, further comprising repeating the obtaining, the passing, the comparing, the updating, and the estimating, whereby the location of the aerial vehicle is updated in real time.

5. The method of any preceding claim, wherein the trained evidential deep learning neural network subsystem is trained using a training corpus comprising labeled pairs of matched and unmatched images.

6. The method of claim 5, wherein the trained evidential deep learning neural network subsystem is trained by, for each respective image pair in the training corpus, performing actions comprising:
passing each image of a respective image pair individually though one or more neural networks, from which a respective pair of feature vectors is obtained;
computing a respective loss based on at least the respective pair of feature vectors; and
updating weights of the one or more neural networks based on the respective loss.

7. The method of any preceding claim, wherein each respective second feature vector is representative of a respective satellite image of a candidate terrain location of the plurality of candidate terrain locations.

8. The method of any preceding claim, wherein each respective location weight is updated further based on a respective uncertainty value of a respective second feature vector.

9. The method of any preceding claim, wherein the recursive Bayesian estimator comprises a particle filter.

10. The method of claim 9, wherein the updating is performed using a measurement model of the recursive Bayesian estimator.

11. The method of any preceding claim, wherein the method is a computer-implemented method.

12. A computer program comprising instructions which, when the computer program is executed by a computer, cause the computer to carry out the method of any preceding claim.

13. A computer-readable storage medium having stored thereon the computer program of claim 12.

14. A system (100) for localizing an aerial vehicle in real time using dynamic uncertainty estimates, the system comprising: a non-transitory computer readable medium comprising instructions; and at least one electronic processor that executes the instructions to perform the method of any of claim 1 - 11.

15. An aerial vehicle comprising the system of claim 14.
